## Europäisches Patentamt
## European Patent Office
## Office européen des brevets

(11) Veröffentlichungsnummer: **0 181 545**
**B1**

(12) **EUROPÄISCHE PATENTSCHRIFT**

(51) Int. Cl.⁴: **C 09 B 67/54**, C 09 B 41/00 // B01F17/42, B01D37/02

(45) Veröffentlichungstag der Patentschrift:
08.02.89

(21) Anmeldenummer: 85113608.5

(22) Anmeldetag: 25.10.85

(54) Verfahren zur Herstellung hochkonzentrierter wässriger Presskuchen von Azodispersionsfarbstoffen.

(30) Priorität: **06.11.84 DE 3440487**

(43) Veröffentlichungstag der Anmeldung:
**21.05.86 Patentblatt 86/21**

(45) Bekanntmachung des Hinweises auf die Patenterteilung:
**08.02.89 Patentblatt 89/6**

(84) Benannte Vertragsstaaten:
**CH DE FR GB IT LI**

(56) Entgegenhaltungen:
**EP-A- 0 074 670**
**FR-A- 1 265 491**
**FR-A- 2 235 728**
**FR-A- 2 269 991**
**NL-C- 88 137**

**CHEMICAL ABSTRACTS, Band 94, Nr. 4, Januar 1981, Seite 69, Zusammenfassung Nr. 17058p, Columbus, Ohio, US; & JP - A - 80 104 358 (MITSUI TOATSU CHEMICALS INC.) 09-08-1980**
**CHEMICAL ABSTRACTS, Band 93, Nr. 18, November 1980, Seite 75, Zusammenfassung Nr. 169620h, Columbus, Ohio, US; & JP - A - 80 99 336 (KATAOKA et al.) 29-07-1980**

(73) Patentinhaber: **HOECHST AKTIENGESELLSCHAFT, Postfach 80 03 20, D-6230 Frankfurt am Main 80 (DE)**

(72) Erfinder: **Weide, Joachim, Im Stückes 63, D-6233 Kelkheim (Taunus) (DE)**
Erfinder: **Dietz, Erwin, Dr., St. Matthäus-Strasse 7, D-6233 Kelkheim (Taunus) (DE)**
Erfinder: **Deubel, Reinhold, Dr., Geierfeld 64, D-6232 Bad Soden am Taunus (DE)**

## Beschreibung

Die Erfindung betrifft ein Verfahren zur Herstellung hochkonzentrierter Presskuchen von Azodispersionsfarbstoffen.

Viele Farbmittel, beispielsweise die besonders wichtigen Azofarbstoffe, werden in wässrigem Medium hergestellt und aus dem Reaktionsgemisch durch Filtrieren oder Abpressen isoliert und gegebenenfalls durch Auswaschen von Nebenprodukten gereinigt. Man erhält Presskuchen mit Feststoffgehalten von ca. 10-30%, die anschliessend getrocknet oder konzentriert werden müssen, da der niedrige Feststoffgehalt der Presskuchen eine praxisgerechte Farbmittelkonzentration bei der Weiterverarbeitung zu Dispersionsfarbstoffteigen nicht zulässt.

Da die Trocknung oder Konzentrierung von wässrigen Presskuchen sehr energieaufwendig ist, ist man bemüht, möglichst hochkonzentrierte Presskuchen herzustellen. Dies kann z.B. durch den Einsatz von Membran-Hochdruck-Filterpressen oder Sieb-Nauta-Mischern unter erheblichem mechanischen Aufwand erfolgen.

Sowohl die erforderliche Trocknung als auch der zur Dispergierung von Pulvern benötigte höhere Dispergieraufwand verursachen jedoch erhebliche Kosten. Der Wunsch nach einer einfachen Methode zur Herstellung hochkonzentrierter wässriger Presskuchen wird aus den genannten Erfordernissen deutlich.

Aus der FR-A-1 265 491 ist bekannt, einen wässrigen Pigmentpresskuchen mit einem nichtionogenen Tensid, das im stark älkalischen Medium unlöslich ist, zu vermischen und dann Alkalihydroxid zuzusetzen, bis eine Phasentrennung erfolgt und die wässrige Phase abgetrennt werden kann. Diese Phasentrennung nach dem Prinzip des Flush-Prozesses erfordert jedoch ausser dem Alkalihydroxid den erheblichen mechanischen Aufwand eines Kneters. Das bekannte Verfahren ist nicht geeignet, den Wassergehalt eines Pigmentpresskuchens auf einfache Weise zu reduzieren oder aus verdünnten wässrigen Pigmentsuspensionen Presskuchen mit hohem Pigmentgehalt herstellen zu können. Vielmehr werden dabei nach der Phasentrennung zunächst typische, nicht filtrierbare Pigmentpasten (Präparationen) erhalten.

Die Erfindung besteht in einem Verfahren zur Herstellung hochkonzentrierter wässriger Presskuchen von Azodispersionsfarbstoffen, dadurch gekennzeichnet, dass man bei der Herstellung des jeweiligen Farbstoffs in wässrigem Medium spätestens vor dessen Isolierung ein oder mehrere nichtionische Tenside, die in wässriger Lösung einen Trübungspunkt haben, zusetzt und den Azodispersionsfarbstoff bei einer Temperatur oberhalb des Trübungspunktes des bzw. der eingesetzten Tenside isoliert.

Die Feststoffgehalte der anfallenden Presskuchen sind vom Tensid, von der Tensidmenge, vom Farbstoff und dabei besonders von der Oberfläche des Farbstoffs abhängig. Ein geeignetes nichtionogenes Tensid oder Tensidgemisch muss in wässriger Lösung einen Trübungspunkt zeigen und bei Temperaturen oberhalb des Trübungspunktes weitgehend seine Hydrophilität verlieren, so dass sich in Wasser durch Phasentrennung zwei Schichten bilden. Der Trübungspunkt des oder der Tenside in Wasser liegt bevorzugt zwischen 5 und 90°C, insbesondere zwischen 20 und 70°C. Die Temperaturangaben gelten für eine Arbeitsweise unter Normaldruck. Die erforderliche Tensidmenge ist von der Grösse der Oberfläche des jeweiligen Farbstoffs abhängig. Die Menge liegt vorzugsweise zwischen 0,5 und 15 mg, insbesondere bevorzugt zwischen 1 und 6 mg pro Quadratmeter Oberfläche des Farbstoffs. In der Regel wird mit steigender Tensidmenge ein Maximum des Feststoffgehalts der Presskuchen durchschritten.

Das Tensid kann an unterschiedlichen Stellen des Herstellungsprozesses eines Azodispersionsfarbstoffs zugesetzt werden. Beispielsweise kann der Zusatz vor der Azokupplung zur Diazoniumsalzlösung oder zur Lösung bzw. Fällung der Kupplungskomponente erfolgen. Bevorzugt ist der Zusatz nach der Kupplungsreaktion zur Kuppelsuspension. Die verteilte Zugabe des Tensids nach einem der genannten Massnahmen ist ebenfalls möglich. Liegt bereits eine verdünnte wässrige Suspension eines Dispergierfarbstoffs vor, muss der Zusatz des Tensids spätestens vor der Isolierung durch Filtration oder Abpressen und dergleichen erfolgen. Bei allen Verfahrensweisen kann das Tensid bei einer Temperatur oberhalb und unterhalb des Trübungspunktes zugesetzt werden. Vorzugsweise wird das Tensid jedoch bei einer Temperatur unterhalb des Trübungspunktes zugesetzt und gut vermischt.

Unter Rühren wird die tensidhaltige Suspension des Dispersionsfarbstoffs auf eine Temperatur oberhalb des Trübungspunktes gebracht und der Farbstoff mit üblichen Hilfsmitteln, beispielsweise durch Absaugen oder Abpressen unter Benutzung vorgeheizter Geräte, isoliert.

Ein weiterer Vorzug des Verfahrens ist die Möglichkeit, nach der Isolierung des Farbstoffs aus dem heissen Reaktionsgemisch mit Wasser bei einer Temperatur oberhalb des Trübungspunktes des jeweiligen Tensids lösliche Nebenprodukte, z.B. Salze, auswaschen zu können, ohne den Tensidgehalt wesentlich zu beeinflussen.

Nach dem Abkühlen der hochkonzentrierten Presskuchen auf eine Temperatur unterhalb des Trübungspunktes werden die Dispergiereigenschaften der Tenside wieder voll wirksam. Durch Einwirkung von geringen Scherkräften, z.B. beim Rühren, tritt in vielen Fällen wieder eine Verflüssigung zu giess- und pumpfähigen Teigen mit hohen Feststoffgehalten ein. Solche Teile mit einem sehr hohen Feststoffgehalt lassen sich kostengünstig zu Pulvern sprühtrocknen. Die Verflüssigung der Presskuchen durch Abkühlen und Festwerden der Presskuchen durch Erhitzen ist reversibel.

Für das Verfahren ist eine Vielzahl nichtionogener Tenside mit unterschiedlichen Strukturen geeignet, sofern sie die Bedingung erfüllen, einen Trübungspunkt in Wasser aufzuweisen. Als besonders geeignet haben sich nichtionogene Oxalkylate von Alkoholen, Fettalkoholen, Phenolen, Alkylphenolen, Naphtholen, Alkylnaphtholen und Fettaminen mit Ethylenoxid und/oder Propylenoxid sowie Blockpolymere von Ethylenoxid und Propylenoxid erwiesen. Die Temperatur des Trübungspunktes derartiger Verbindungen hängt von der Länge der Polyalkylenoxy-Kette ab und kann bei der Synthese der Tenside durch Wahl der Menge eingesetzten Ethylenoxids und/oder Propylenoxids variiert werden.

Geeignete nichtionogene Tenside sind Verbindungen mit einer Poly(ethylenoxy)-Kette oder einer Poly-(ethylenoxy)- poly(methylethylenoxy)-Kette, die über ein Sauerstoff, oder ein Stickstoffatom mit Resten der folgenden Art verbunden sind: aliphatische oder cycloaliphatische Alkylreste, primäre oder sekundäre Alkylreste mit 1 bis 6 C-Atomen, insbesondere bevorzugt Alkylreste mit 10 bis 18 C-Atomen Kettenlänge, speziell dem Nonyl-, Decyl-, Undecyl-, Dodecyl-, Tridecyl-, Tetradecyl-, Pentadecyl-, Hexadecyl-, Heptadecyl-, Octadecyl-, 2-Butyloctyl-, 2-Pentyloctyl-, 2-Hexyldecyl-, 2-Heptyl-undecyl-, 2-Octyldodecyl-, 2-Nonyltridecyl-, 2-Decyltetradecyl-, 10-Undecenyl-, Oleyl-, 9-Octadecenyl-, Linoleyl- oder Linolenylrest; aromatische Reste wie der gegebenenfalls substituierte Phenyl- oder der Alkylphenylrest mit bis zu drei primären oder sekundären Alkylresten, vorzugsweise dem Hexylphenyl-, Heptylphenyl-, Octylphenyl-, Nonylphenyl-, Undecylphenyl-, Dodecylphenyl-, Isononylphenyl-, Tributylphenyl- oder Dinonylphenylrest, der Phenylrest mit weiteren aromatischen Resten substituiert wie der Benzyl-p-phenyl-phenylrest; Napththyl- oder Alkylnaphthylreste, vorzugsweise der α-Naphthyl- oder β-Naphthylrest oder der Alkyl-β-naphthylrest mit 1 bis 3 unverzweigten oder verzweigten Alkylgruppen der Art Methyl, Butyl, Octyl, Nonyl, Decyl, Dodecyl oder Tetradecyl; gegebenenfalls alkylsubstituierte heterocyclische Reste oder mit solchen substituierte Alkylreste wie beispielsweise der 2-[2-(8-Heptadecen--1-yl)-4,5-dihydro-1-imidazolyl]-ethyl-Rest.

Bevorzugt sind auch Gemische der obengenannten Verbindungen und insbesondere Gemische wie sie bei der Oxalkylierung mit Ethylenoxid und/oder Propylenoxid von synthetischen Fettalkoholen aus der Oxosynthese oder von Fettalkoholen aus natürlichen Rohstoffen (nach Fettspaltung und Reduktion) gewonnen werden. Als natürliche Rohstoffe seien Kokosöl, Palmöl, Baumwollsaatöl, Sonnenblumenöl, Sojabohnenöl, Leinöl, Rüböl, Talg und Fischöl genannt. Ebenso geeignet sind entsprechende Fettamin-Oxalkylate aus diesen natürlichen Rohstoffen, insbesondere Kokosfettamin, Talgamin, Oleylamin.

Ausserdem sind auch oxalkylierte, höhermolekulare oberflächenaktive Hilfsmittel (Tenside) zu erwähnen, wie sie beispielsweise in den folgenden Patent-, Offen- und Auslegeschriften beschrieben werden, wobei davon diejenigen Tenside ausgenommen sind, die keinen Trübungspunkt in wässriger Lösung haben:

DE-A1-2 730 223, DT-B2-2 156 603,
DE-A1-3 026 127, DT-B2-2 421 606 und
EP-A1-0 017 189.

Welches Tensid eingesetzt wird, ist vom jeweiligen Produkt und vom Einsatzgebiet der erfindungsgemäss anfallenden hochkonzentrierten Presskuchen oder Pulver abhängig.

Im Vergleich zu den herkömmlichen Verfahren zur Herstellung wässrigee Presskuchen von Azodispersionsfarbstoffen ergibt die Anwendung des erfindungsgemässen Verfahrens eine verbesserte Raumzeitausbeute bei der Filtration der Farbstoffe, eine Einsparung von Trockenkosten und einen verringerten Dispergieraufwand bei der Verarbeitung der hochkonzentrierten vorpräparierten Presskuchen zu wässrigen Farbstoffdispersionen. Die bei der Weiterverarbeitung der erfindungsgemäss hergestellten Presskuchen erhaltenen Farbstoffzubereitungen von Dispergierfarbstoffen, eignen sich gleichermassen wie die konventionell hergestellten Farbstoffzubereitungen zum Färben von natürlichen und synthetischen Materialien.

In den folgenden Beispielen beziehen sich Teile und Prozentangaben auf das Gewicht, wenn nichts anderes angegeben ist. Gewichts- und Volumenteile stehen im Verhältnis von kg und Liter. Die Trübungspunkte wurden entsprechend DIN 53 917 bestimmt.

*Beispiel 1*

153 Teile 2-Hydroxy-3-naphthoesäure-p-anisidid wurden in 1550 Teilen Wasser durch Zugabe von 121,5 Teilen 33%iger Natronlauge gelöst. Dieser Lösung wurden 20 Teile Nonylphenolpolyglykolether mit einem Trübungspunkt in Wasser von 32-34°C zugegeben. Diese Kuppelkomponentenlösung wurde unter Zugabe von 1250 Teilen Eis mit einer Lösung von 69,75 Teilen Phenyldiazoniumchlorid, das nach üblicher Weise hergestellt wurde, bei einer Temperatur zwischen +2°C und +7°C versetzt. Nach beendeter Kupplung wurde mit verdünnter Salzsäure auf einen pH-Wert von 7 gestellt. Danach lag eine Farbstoffsuspension von 196 Teilen C.I. Disperse Orange 42 (spez. Oberfläche nach BET von 54,5 m²/g) in einem Kuppelvolumen von 4500 Teilen vor, die unter Rühren mit Direktdampf auf 80 bis 85°C erhitzt, bei dieser Temperatur über eine Filternutsche abgesaugt und mit 50-60°C heissem Wasser salzfrei gewaschen wurde. Der anfallende Farbstoff-Presskuchen hatte einen Feststoffgehalt von 46%. Nach Zusatz eines anionischen Dispergiermittels vom Typ Ligninsulfonat konnte aus diesem Presskuchen durch Anrühren mittels Dissolver und kurzzeitigem Dispergieren in einer Perlmühle ein Dispersionsfarbstoffteig mit guten färberischen Eigenschaften hergestellt werden.

*Vergleichsbeispiel:*

Der Versuch wurde ohne Zusatz des Tensids wiederholt. Man erhielt einen Farbstoff-Presskuchen mit 15,5% Feststoffgehalt.

*Beispiel 2*

153 Teile 2-Hydroxy-3-naphthoesäure-p-anisidid wurden in 1550 Teilen Wasser durch Zugabe von 121,5 Teilen Natronlauge 33%ig gelöst. Diese Kuppelkomponentenlösung wurde unter Zugabe von 1250 Teilen Eis mit einer Lösung von 69,75 Teilen Phenyldiazoniumchlorid, das nach üblicher Weise hergestellt wurde und der 20 Teile eines Nonylphenolpolyglykolethers mit einem Trübungspunkt in Wasser von 32-34°C zugesetzt wurden, bei einer Temperatur zwischen +2°C und +7°C versetzt. Nach beendeter Kupplung wurde mit verdünnter Salzsäure auf einen pH-Wert von 7 eingestellt. Anschliessend wurde mit Direktdampf auf 80-85°C erhitzt und bei dieser Temperatur über eine Filternut-

sche abgesaugt sowie mit 50-60°C heissem Wasser salzfrei gewaschen. Die anfallenden 507 Teile Presskuchen von C.I. Disperse Orange 42 hatten einen Feststoffgehalt von 42,6%.

*Beispiel 3*

153 Teile 2-Hydroxy-3-naphthoesäure-p-anisidid wurden in 1550 Teilen Wasser durch Zugabe von 121,5 Teilen 33%iger Natronlauge gelöst. Diese Kuppelkomponentenlösung wurde unter Zugabe von 1250 Teilen Eis mit einer Lösung von 69,75 Teilen Phenyldiazoniumchlorid, das nach üblicher Weise hergestellt wurde, bei einer Temperatur zwischen +2°C und +7°C versetzt. Nach beendeter Kupplung wurden der Kuppelsuspension 20 Teile Nonylphenolpolyglykolether mit einem Trübungspunkt in Wasser von 32-34°C zugesetzt und mit verdünnter Salzsäure auf einen pH-Wert von 7 eingestellt. Anschliessend wurde mit Direktdampf auf 80-85°C erhitzt und bei dieser Temperatur über eine Filternutsche abgesaugt und mit 50-60°C heissem Wassersalzfrei gewaschen. Die anfallenden 374 Teile Presskuchen von C.I. Disperse Orange 42 hatten einen Feststoffgehalt von 57,8%.

*Beispiel 4*

Durch Kupplung wurde eine Farbstoffsuspension von 800 Teilen C.I. Disperse Yellow 227 (spez. Oberfläche nach BET von 23,2 m$^2$/g) in einem Kuppelvolumen von 22 000 Teilen hergestellt. Dieser Farbstoffsuspension wurden bei 22°C 80 Teile Benzyl-p-phenyl-phenol-polyglykolether mit einem Trübungspunkt in der Mutterlauge von 60-62°C zugegeben und gut verrührt. Danach wurde unter Rühren auf 85°C erhitzt und bei dieser Temperatur der Farbstoff über eine Filterpresse isoliert. Anschliessend wurde mit 70-75°C heissem Wasser neutral und salzfrei gewaschen und 10 Minuten mit Luft trockengeblasen. Der anfallende Farbstoff-Presskuchen hatte einen Feststoffgehalt von 41,4%. Ein solchermassen hergestellter Presskuchen liess sich in einem Drittel der für einen unbehandelten Presskuchen benötigten Dispergierzeit zu einem praxisgerechten Dispersionsfarbstoffteig mit guten färberischen Eigenschaften verarbeiten.

*Vergleichsbeispiel:*

Der Versuch wurde ohne Zusatz des Tensids wiederholt. Man erhielt einen Presskuchen mit 23,7% Feststoffgehalt.

*Beispiel 5*

Es wurde in der gleichen Weise wie in Beispiel 4 verfahren, aber anstelle von 80 Teilen Benzyl-p-phenyl-phenol-polyglykolether 80 Teile Tributylphenol-polyglykolether mit einem Trübungspunkt in Wasser von 62-64°C zugesetzt. Man erhielt einen Presskuchen mit einem Feststoffgehalt von 41,2%, der sich nach dem Abkühlen auf 25°C ohne weitere Zusätze mittels eines Dissolvers zu einem fliess- und pumpfähigen Teig verflüssigen liess.

*Beispiel 6*

Es wurde in der gleichen Weise wie in Beispiel 4 verfahren, aber anstelle von 80 Teilen Benzyl-p-phe-

nyl-phenol-polyglykolether 80 Teile eines Polymerisationsproduktes aus Propylen- und Ethylenoxid mit einem Trübungspunkt in Wasser von 55°C zugesetzt. Man erhielt einen Farbstoff-Presskuchen mit einem Feststoffgehalt von 39%.

*Beispiel 7*

Durch Kupplung wurde eine Farbstoffsuspension von 800 Teilen C.I. Disperse Yellow 227 in einem Kuppelvolumen von 22 000 Teilen hergestellt. Dieser Farbstoffsuspension wurden bei 12°C 40 Teile eines C$_{10}$-Fettalkohol-ethylenoxid-propylenoxid-Adduktes mit einem Trübungspunkt in Wasser von 18-20°C und 40 Teilen eines Naturharzsäure-ethylenoxid-Adduktes mit einem Trübungspunkt in Wasser von 40-42°C zugegeben und gut verrührt. Dann wurde unter Rühren auf 60°C erhitzt und bei dieser Temperatur der Farbstoff über eine Filterpresse isoliert. Anschliessend wurde mit 55°C heissem Wasser neutral und salzfrei gewaschen und 10 Minuten mit Luft trockengeblasen. Der anfallende Presskuchen hatte einen Feststoffgehalt von 38,4%.

**Patentansprüche**

1. Verfahren zur Herstellung eines hochkonzentrierten wässrigen Presskuchens eines Azodispersionsfarbstoffs dadurch gekennzeichnet, dass man bei der Herstellung des Farbstoffs in wässrigem Medium spätetens vor dessen Isolierung ein oder mehrere nichtionische Tenside, die in wässriger Lösung einen Trübungspunkt haben, zusetzt und den Azodispersionsfarbstoff bei einer Temperatur oberhalb des Trübungspunktes des bzw. der eingesetzten Tenside filtriert.

2. Verfahren nach Anspruch 1, dadurch gekennzeichnet, dass man das Tensid oder die Tenside bei einer Temperatur unterhalb des Trübungspunktes zu der Diazoniumsalzlösung und/oder zu der Lösung bzw. Fällung der Kupplungskomponente und/oder der Kuppelsuspension nach erfolgter Kupplungsreaktion zusetzt.

3. Verfahren nach Anspruch 1 oder 2, dadurch gekennzeichnet, dass das nichtionogene Tensid oder Tensidgemisch einen Trübungspunkt in Wasser zwischen 5 und 90°C hat.

4. Verfahren nach Anspruch 1 oder 2, dadurch gekennzeichnet, dass das nichtionogene Tensid oder Tensidgemisch einen Trübungspunkt in Wasser zwischen 20 und 70°C hat.

5. Verfahren nach einem oder mehreren der Ansprüche 1 bis 4, dadurch gekennzeichnet, dass man pro Quadratmeter Farbstoffoberfläche 0,5 bis 15 mg Tensid einsetzt.

6. Verfahren nach einem oder mehreren der Ansprüche 1 bis 4, dadurch gekennzeichnet, dass man pro Quadratmeter Farbstoffoberfläche 1 bis 6 mg Tensid einsetzt.

7. Verfahren nach einem oder mehreren der Ansprüche 1 bis 6, dadurch gekennzeichnet, dass man als nichtionogene Tenside Blockpolymerisate von Ethylenoxid und Propylenoxid einsetzt.

8. Verfahren nach einem oder mehreren der Ansprüche 1 bis 6, dadurch gekennzeichnet, dass man als nichtionogene Tenside Oxalkylate von aliphatischen Hydroxy- oder Aminoverbindungen einsetzt.

9. Verfahren nach einem oder mehreren der Ansprüche 1 bis 6, dadurch gekennzeichnet, dass man als nichtionogene Tenside Oxalkylate aus aromatischen, cycloaliphatischen oder heterocyclischen Hydroxy- oder Aminoverbindungen einsetzt.

10. Verfahren nach einem oder mehreren der Ansprüche 1 bis 9, dadurch gekennzeichnet, dass der oberhalb des Trübungspunktes erhaltene Presskuchen unterhalb des Trübungspunktes durch Einwirkung von Scherkräften verflüssigt wird.

## Claims

1. A process for preparing a highly concentrated aqueous press cake of an azo disperse dye, which comprises adding one or more nonionic surfactants which have a cloud point in aqueous solution in the course of the preparation of the respective dye in an aqueous medium, at the latest before the dye is isolated, and filtering off the azo disperse dye at a temperature above the cloud point of the surfactant(s) used.

2. The process as claimed in Claim 1, wherein the surfactant or the surfactants is or are added at a temperature below the cloud point to the diazonium salt solution and/or to the solution or suspension of the coupling component and/or to the coupling suspension after the coupling reaction has ended.

3. The process as claimed in Claim 1 or 2, wherein the nonionic surfactant or surfactant mixture has a cloud point in water between 5 and 90°C.

4. The process as claimed in Claim 1 or 2, wherein the nonionic surfactant or surfactant mixture has a cloud point in water between 20 and 70°C.

5. The process as claimed in one or more of claims 1 to 4, wherein 0.5 to 15 mg of surfactant is used per square meter of dye surface area.

6. The process as claimed in one or more of claims 1 to 4, wherein 1 to 6 mg of surfactant is used per square meter of dye surface area.

7. The process as claimed in one or more of claims 1 to 6, wherein the nonionic surfactants used are block polymers of ethylene oxide and propylene oxide.

8. The process as claimed in one or more of claims 1 to 6, wherein the nonionic surfactants used are oxyalkylates of aliphatic hydroxy or amino compounds.

9. The process as claimed in one or more of claims 1 to 6, wherein the nonionic surfactants used are oxylalkylates of aromatic, cycloaliphatic or heterocyclic hydroxy or amino compounds.

10. The process as claimed in one or more of claims 1 to 9, wherein the press cake obtained above the cloud point is liquefied below the cloud point through the action of shearing forces.

## Revendications

1. Procédé pour préparer un gâteau aqueux de compression, fortement concentré, d'un colorant azoïque utilisable en dispersion, procédé caractérisé en ce qu'on ajoute lors de la préparation du colorant en milieu aqueux, au plus tard avant son isolement, un ou plusieurs surfactifs non ioniques ayant, en solution aqueuse, un point de trouble, et l'on filtre le colorant azoïque, utilisable en dispersion, en opérant à une température supérieure au point de trouble du ou des surfactifs que l'on utilise.

2. Procédé selon la revendication 1, caractérisé en ce qu'on ajoute le surfactif ou les surfactifs, à une température inférieure au point de trouble, à la solution du sel de diazonium et/ou à la solution ou au précipité du copulant et/ou à la suspension de copulation, après achèvement de la réaction de copulation.

3. Procédé selon la revendication 1 ou 2, caractérisé en ce que le surfactif non ionogène ou le mélange des surfactifs non ionogènes présente dans l'eau un point de trouble compris entre 5 et 90°C.

4. Procédé selon la revendication 1 ou 2, caractérisé en ce que le surfactif ou le mélange des surfactifs, non ionogène, présente dans l'eau un point de trouble compris entre 20 et 70°C.

5. Procédé selon une ou plusieurs des revendications 1 à 4, caractérisé en ce qu'on utilise, par mètre carré de surface du colorant, 0,5 à 15 mg du surfactif.

6. Procédé selon une ou plusieurs des revendications 1 à 4, caractérisé en ce qu'on utilise, par mètre carré de surface du colorant, 1 à 6 mg de surfactif.

7. Procédé selon une ou plusieurs des revendications 1 à 6, caractérisé en ce qu'on utilise, comme surfactifs non ionogènes, des polymères à blocs ou longues séquences de l'oxyde d'éthylène et de l'oxyde de propylène.

8. Procédé selon une ou plusieurs des revendications 1 à 6, caractérisé en ce qu'on utilise comme surfactifs non ionogènes des produits d'oxyalkylation de composés hydroxylés ou aminés aliphatiques.

9. Procédé selon une ou plusieurs des revendications 1 à 6, caractérisé en ce qu'on utilise comme surfactifs non ionogènes des produits d'oxyalkylation de composés hydroxylés ou aminés aromatiques, cycloaliphatiques ou hétérocycliques.

10. Procédé selon une ou plusieurs des revendications 1 à 9, caractérisé en ce qu'on soumet le gâteau de compression, obtenu à une température supérieure au point de trouble, à une fluidification, par l'action de forces de cisaillement à une température inférieure au point de trouble.